# NEUE EUROPÄISCHE PATENTSCHRIFT

(11) **EP 0 059 908 B2**
(45) Veröffentlichungstag und Bekanntmachung des Hinweises auf die Entscheidung über den Einspruch: **07.01.1993**
(45) Hinweis auf die Patenterteilung: 04.12.1985
(21) Anmeldenummer: 82101529.4
(22) Anmeldetag: 27.02.1982
(51) Int. Cl.: C08L 71/12, C08L 51/04

(54) **Thermoplastische Formmassen**
Thermoplastic moulding masses
Masses à mouler thermoplastiques

(30) Priorität: 05.03.1981 DE 3108218
(43) Veröffentlichungstag der Anmeldung: 15.09.1982
(73) Patentinhaber: BASF Aktiengesellschaft, 67063 Ludwigshafen (DE)
(72) Erfinder: Brandstetter, Franz, Dr., D-6730 Neustadt (DE); Echte, Adolf, Dr., D-6700 Ludwigshafen (DE); Naarmann, Herbert, Dr., D-6719 Wattenheim (DE); Priebe, Edmund, Dr., D-6710 Frankenthal (DE)

(56) Entgegenhaltungen:
- DE-B- 2 258 896
- DE-C- 2 119 301
- DE-C- 2 211 005
- US-A- 3 257 357
- US-A- 3 383 435
- US-A- 4 128 602
- US-A- 4 128 603
- Echte et al., Angewandte Chemie, Band 93, Nr. 4, 1981, S. 372ff
- K.H. Nordsiek et al., Kautschuk + Gummi Kunststoffe, 33. Jahrgang, Nr. 4, 1981, S. 251ff
- J.L. White et al., Polymer Engineering Reviews, Band 1, Nr. 3, 1981, S. 217ff

## Beschreibung

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styrolpolymerisate und Polyphenylenether enthalten, sind z. B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß die mechanischen Eigenschaften diese Formmassen stark von den Verarbeitungstemperaturen abhängen.

Der vorliegenden Erfindung lag daher die Aufgabe zugrunde, thermoplastische Formmassen auf der Grundlage von schlagfest modifizierten Styrolpolymerisaten und Polyphenylenethern zu schaffen, die zu Formteilen mit guten mechanischen Eigenschaften, die von der Verarbeitungstemperatur nur geringfügig abhängen, führen.

Diese Aufgabe wird erfindungsgemäß gelöst durch thermoplastische Formmassen auf der Grundlage von schlagfest modifizierten Styrolpolymerisaten, deren Weichkomponentengehalt mindestens 20 Gew.-% beträgt und der mittlere Teilchendurchmesser der Weichkomponente im bereich von 0,6 bis 4 µm liegt, der für die Schlagfestmodifizierung eingesetzte Kautschuk eine Glastemperatur unter -20°C besitzt und Polyphenylenethern, deren Grenzviskosität 0,55 bis 0,75 dl/g beträgt, dadurch gekennzeichnet, daß die Formmassen Mischungen aus zwei modifizierten Styrolpolymerisaten enthalten, deren Kautschukanteil zwischen 2 und 20 Gew.-% beträgt, wobei die Weichkomponente eines Styrolpolymerisates einen mittleren Teilchendurchmesser von 0,3 bis 0,9 f..lm hat und die Teilchen 80 bis 99 Gew.-% der Teilchen der Weichkomponenten der Mischung ausmachen und die Weichkomponente des anderen Styrol polymerisates einen mittleren Teilchendurchmesser von 3 bis 7 f..lm hat und die Teilchen 1 bis 20 Gew.-% der Teilchen der Weichkomponente ausmachen, wobei Formmassen auf der Grundlage von schlagfestmodifizierten Styrolpolymerisaten und Polyphenylenethern, in denen die Weichkomponente eines Styrolpolymerisates einen mittleren Teilchendurchmesservon 0,3 bis 0,5 µm und die Teilchen 95 bis 85 Gew.,-% der Teilchen der Mischung ausmachen und die Weichkomponente des anderen Styrolpolymerisates einen mittleren Teilchendurchmeser von 4 bis 7 µm und die Teilchen 15 bis 5 Gew.-% der Teilchen der Mischung ausmachen, ausgenommen sind.

Unter Formmassen sollen Mischungen verstanden werden, die sich durch thermoplastische Verarbeitung innerhalb bestimmter Temperaturbereiche zu Formmassen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, daß die obengenannten Teilchengrö- ßenverteilungen eintreten. Man kann aber auch schlagfest modifizierte Styrolpolymerisate, deren Weichkomponenten unterschiedliche Teilchengrößen haben, miteinander mischen. Die in den erfindungsgemäßen Formmassen enthaltenen Styrolpolymerisate können beispielsweise durch Mischen von Polymerisaten mit einer bestimmten Teilchengröße mit solchen Polymerisaten mit anderen Teilchengrößen erhalten werden. So kann man beispielsweise 90 Gewichtsteile eines Polymerisates mit einer mittleren Teilchengröße von 0,6 µm und 10 Gewichtsteilen eines Polymerisates mit einer mittleren Teilchengröße von 5 µm verwenden.

Die thermoplastischen Formmassen können schlagfest modifizierte Styrolpolymerisate und Polyphenylenether in beliebigen Mengen, beispielsweise in Mengen von 5 bis 90 Gew.-% Styrolpolymerisat und 95 bis 10 Gew.% Polyphenylenether enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenether enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Als monovinylaromatische Verbindungen kommen dabei insbesondere Styrol in betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur unter - 20° C besitzen. Besonders eignen sich Butadien-Polymerisate mit einem 1,4-cis-Gehalt, der zwischen 25 und 98 liegt.

Die Herstellung der schlagfest modifizierten Polymerisate mit dem erfindungsgemäßen Eigenschaftsbild geschieht vorzugsweise durch Polymerisation der monovinylaromatischen Verbindungen in Ggenwart des Kautschuks. Die Polymerisation erfolgt, wie erwähnt, dabei in der Regel in an sich bekannter Weise in Masse, Lösung oder wäßriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. bevorzugt werden dabei Toluol, Ethylbenzol, die Xylole oder Gemische dieser Verbindungen.

Bei der Polymerisation in wäßriger Dispersion wird im allgemeinen auf den Zusatz von Lösungsmitteln verzichtet; eine besonders günstige Ausführungsform besteht darin, die Lösung des Kautschuks in den Monomeren bis zu einem Umsatz von etwa 45% in Masse unter Einwirkung von Scherkräften vorzupolymerisieren, diese Reaktionsmasse dann in Wasser zu suspendieren und anschließend auszupolymerisieren. Im allgemeinen wird dieses Verfahren unter Zugabe öllöslicher, in Radikale zerfallender Initiatoren wie benzoylperoxid, Dicumylperoxid, Di-tert.-butylperoxid, Azo-diisobutyronitril u. ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Disgergiermittel, z. B. von Bariumsulfat. Die Suspendiermittel werden im allgemeinen in Mengen von 0,1 bis 5 Gew.-%, bezogen auf die organische Phase, eingesetzt.

Bei der Polymerisation in Masse oder Lösung wird in der Regel in einem Temperaturbereich zwischen 50 und 250°C, vorzugsweise 100 bis 200° C, polymerisiert. Der Polymerisationsansatz muß dabei mindestens im ersten Abschnitt der Polymerisation, d. h. bis zu Umsätzen der monovinylaromatischen Verbindungen gleich oder kleiner 45 Gew.-% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906, auf die wegen weiterer Einzelheiten verwiesen werden soll.

Unter Weichkomponente im Sinne der Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflußt. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unterVerbrauch der Monomeren; dabei tritt ein Wechsel der Phasenkohärenz auf. bei diesem bilden sich Tropfen von Kautschuklösung in Polyvinylaromatlösung aus; diese Trogfen halten aber ihrerseits kleinere Tropfen der jetzt äußeren Phase eingeschlossen.

Neben diesem Vorgang läuft eine Pfropfreaktion ab, bei der chemische Verknüpfungen zwischen den Kautschukmolekülen und den Polyvinylaromaten unter bildung von Pfropf-Copolymeren aus beiden Bestandteilen gebildet werden. Dieser Vorgang ist bekannt und z. B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die ausgepfropften Kautschukteilchen mit Einschlüssen aus Matrixmaterial (Polyvinylaromat) besteht. Je größer die Menge des eingeschlossenen Matrix-Materials ist, um so größer ist bei konstantem Kautschukgehalt die Menge der Weichkomponente.

Diese richtet sich also nicht nur nach der Menge des eingesetzten Kautschuks, sondern auch nach der Prozeßführung besonders vor und während der Phaseninversion. Die Einzelmaßnahmen sind grozeßspezifisch und dem Fachmann bekannt (siehe z. B. Freeguard, Brit. Polym. J. 6 (1974) S. 203 bis 228; Wagner, Robeson, Rubber Chem. Techn. 43 (1970), 1129 ff.).

Um zu schlagfesten thermoplastischen Formmassen mit den erfindungsgemäßen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, daß der Weichkomponentengehalt im resultierenden schlagfest modifizierten Polymerisat der monovinylaromatischen Verbindungen mindestens 20 Gew.-%, vorzugsweise 25 Gew.-% und mehr, bezogen auf das schlagfest modifizierte Polymerisat, beträgt. Die Obergrenze des Weichkomponentengehaltes ist durch die Forderung, daß der Polyvinylaromat die kohärente Phase bilden muß, zu etwa 50 bis 60 Gew.-% gegeben. Für die erfindungsgemäßen thermoplastischen Formmassen hat sich dabei ein WeichkomponentenGehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 20 Gew.-%, vorzugsweise von 5 bis 15 Gew.- %.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehroderweniger starkem Maße während der Polymerisation durch die monovinylaromatischen Verbindungen gepfrogft worden sind.

Die Bestimmung der mittleren Teilchengröße der dispersen Weichkomponente kann z. B. durch Auszählung und Auswertung elektronenmikroskopischer Dünnschichtaufnahmen der schlagfest modifizierten Polymerisate erfolgen (vgl. F. Lenz, Zeitschrift für Wiss. Mikroskopie, 63 (1956), S. 50/56).

Die Einstellung der Teilchengröße der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d. h. bis zu einem Umsatz der Monomeren von gleich oder kleiner als 45%. Dabei ist die Teilchengröße der dispersen Weichkomponenten-Phase um so größer, je kleiner die Rührerdrehzahl und damit je kleiner die Scherbeanspruchung ist. Der Zusammenhang zwischen der Rührgeschwindigkeit und der Größe und Verteilung der Kautschukteilchen im resultierenden schlagfesten Polymerisat ist z. B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengröße der dispersen Weichkomponenten-Phase hängt unter anderem von den jeweiligen Apparateverhältnissen ab und ist dem Fachmann bekannt bzw. läßt sich durch ein paar einfache Versuche bestimmen.

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50% Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Bei den Polyphenylenethern handelt es sich um Verbindungen auf der basis von in ortho-Position disubstituierten Polyphenylenoxiden, wobei der Ethersauerstoff der einen Einheit an den benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Halogen, Kohlenwasserstoffe, die kein a-ständiges tert. Wasserstoffatom besitzen, Halogenkohlenwasserstoffe, Phenylreste und Kohlenwasserstoff-oxi-Reste tragen. So kommen in Frage:
Poly(2,6-dichlor-1,4-phenylen)-ether, Poly-(2,6-diphenyl-1,4-phenylen)ether,
Poly(2,6-dimethoxy-1,4-phenylen)ether, Poly(2,6-dimethyl-1,4-phenylen)ether,
Poly(2,6-dibrom-1,4-phenylen)ether.

Bevorzugterweise wird der Poly(2,6-dimethyl-1,4-phenylen)ether eingesetzt. Die Grenzviskosität (gemessen in Chloroform bei 30° C) der eingesetzten Polyether soll dabei 0,55 bis 0,75 [dl/g] betragen. Besonders bevorzugt sind dabei PoIy-(2,6-dirnethyI-1,4-phenylen)-ether mit einer Grenzviskosität von 0,55-0,66 [dl/g].

Die Polyether können nach jedem beliebigen Verfahren hergestellt werden, insofern gewährleistet ist, daß die oben angegebenen Grenzviskositäten erreicht werden. So gelangt man beispielsweise zu einem für die erfindungsgemäßen Formmassen geeigneten Poly-(2,6-dimethyl-1,4-phenylen)ether, wenn man in Gegenwart von Octylamin und Kupfer-I-bromid in Toluol den Polyether bei 20° C herstellt.

Die Mischungen aus den schlagzäh modifizierten Styrolpolymerisaten und Polyphenylenethern können außerdem weitere Zusatzstoffe wie Pigmente, Farbstoffe, Füllstoffe, Flammschutzmittel, weitere verträgliche Polymere, Antistatika, Antioxidantien und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her. Die erfindungsgemäßen Formmassen besitzen eine hohe Zähigkeit, die von den Verarbeitungstemperaturen weitgehendst unabhängig ist.

## Patentansprüche

1. Thermoplastiche Formmassen auf der Grundlage von schlagfest modifizierten Styrolpolymerisaten, deren Weichkomponentengehalt mindestens 20 Gew.-% beträgt und der mittlere Teilchendurchmesser der Weichkomponente im Bereich von 0,6 bis 4 µm liegt, der für die Schlagfestmodifizierung eingesetzte Kautschuk eine Glastemperatur unter -20°C besitzt und Polyphenylenethern, deren Grenzviskosität 0,55 bis 0,75 dl/g beträgt, dadurch gekennzeichnet, daß die Formmassen Mischungen aus zwei modifizierten Styrolpolymerisaten enthalten, deren Kautschukanteil zwischen 2 und 20 Gew.-% beträgt, wobei die Weichkomponente eines Styrolpolymerisates einen mittleren Teilchendurchmesser von 0,3 bis 0,9 µm hat und die Teilchen 80 bis 99 Gew.-% der Teilchen der Weichkomponenten der Mischung ausmachen und die Weichkomponente des anderen Styrolpolymerisates einen mittleren Teilchendurchmesservon 3 bis 7 µm hat und die Teilchen 1 bis 20 Gew.-% der Teilchen der Weichkomponente ausmachen, wobei Formmassen auf der Grundlage von schlagfestmodifizierten Styrolpolymerisaten und Polyphenylenethern, in denen die Weichkomponente eines Styrolpolymerisates einen mittleren Teilchendurchmesser von 0,3 bis 0,5 µm und die Teilchen 95 bis 85 Gew.,-% der Teilchen der Mischung ausmachen und die Weichkomponente des anderen Styrol polymerisates einen mittleren Teilchendurchmeser von 4 bis 7 µm und die Teilchen 15 bis 5 Gew.-% der Teilchen der Mischung ausmachen, ausgenommen sind.

## Claims

1. A thermoplastic molding material based on high impact modified styrene polymers, whose content of flexible component is at least 20% by weight and in which the mean particle diameter of the flexible component is from 0.6 to 4 f..lm and the rubber used for toughening has a glass transition temperature below -20°C, and polyphenylene ethers whose intrinsic viscosity is from 0.55 to 0.75 di/g, wherein the molding material contains a blend of two modified styrene polymers whose rubber content is from 2 to 20% by weight, the flexible component of one styrene polymer having a mean particle diameter of from 0.3 to 0.9 µm and the particles accounting for from 80 to 99% by weight of the particles of the flexible components of the blend, and the flexible component of the other styrene polymer having a mean particle diameter of from 3 to 7 µm and the particles accounting for from 1 to 20% by weight of the particles of the flexible component, with the exception of molding materials based on high impact styrene polymers and polyphenylene ethers in which the flexible component of one styrene polymer has a mean particle diameter of from 0.3 to 0.5 µm and the particles account for from 95 to 85% by weight of the particles of the blend and the flexible component of the other styrene polymer has a mean particle diameter of from 4 to 7 µm and the particles account for from 15 to 1 % by weight of the particles of the blend.

## Revendications

1. Matières à mouler thermoplastiques à base de polymères styréniques modifiés pour résister aux chocs, dont la proportion de la composante molle atteint au moins 20% en poids et le diamètre moyen des particules est compris entre 0,6 et 4 wm, où le caoutchouc employé pour l'obtention de la résistance aux chocs possède une température de transition vitreuse inférieure à -20°C, et de poly(éthers de phénylène) dont la viscosité limite est de 0,55 à 0,75 dl/g, caractérisées en ce que la composante molle contient au moins deux polymères styréniques modifiés dont la proportion de caoutchouc est comprise entre 2 et 20% en poids, la composante molle d'un polymère styrénique ayant un diamètre moyen de particules de 0,3 à 0,9 µm et les particules constituant 40 à 99%. en poids des composantes molles du mélange, la composante molle de l'autre polymère styrénique ayant un diamètre moyen de particules de 3 à 7 µm et les particules constituant de 1 à 20% en poids des particules des composantes molles, d'où sont exclues les matières à mouler à base de polymères styréniques modifiés pour résister aux chocs et de poly(éthers de phénylène) dans lesquelles la composante molle d'un polymère styrénique a un diamètre moyen de particules de 0,3 à 0,5 µm et les particules constituent 95 à 80% en poids des particules du mélange et la composante molle de l'autre polymère styrénique a un diamètre moyen de particules de 4 à 7 µm et les particules constituent de 15 à 5% en poids des particules du mélange.
